# EUROPÄISCHE PATENTSCHRIFT

(11) **EP 2 781 428 B1**
(45) Veröffentlichungstag und Bekanntmachung des Hinweises auf die Patenterteilung: **02.08.2017**
(21) Anmeldenummer: 14157797.3
(22) Anmeldetag: 05.03.2014
(51) Int. Cl.: B62B 1/12, B62B 5/06

(54) **Transportkarre mit schwenkbarer Handgriffanordnung**
Transport cart with pivotable handle assembly
Chariot de transport avec poignée pivotante

(30) Priorität: 21.03.2013 DE 102013102911
(43) Veröffentlichungstag der Anmeldung: 24.09.2014
(73) Patentinhaber: Wolfcraft GmbH, 56746 Kempenich (DE)
(72) Erfinder: Zimmer, Jürgen, 56077 Koblenz (DE); Moog, Christopher, 56422 Wirges (DE); Fronczak, Christof, 56754 Dünfus (DE)
(74) Vertreter: Grundmann, Dirk

(56) Entgegenhaltungen:
- DE-A1-102004 038 853
- DE-A1-102010 017 156
- DE-U1- 9 002 279
- DE-U1- 20 010 856

## Beschreibung

Die Erfindung betrifft Transportkarre mit einem Tragegestell, an dem mindestens eine Handgriffanordnung befestigt ist, die um eine Schwenkachse von einer Verwahrstellung in eine Gebrauchsstellung schwenkbar ist, in der die Handgriffanordnung mit einer Drehsicherungseinrichtung gegen Verschwenken gesichert ist, wobei die Drehsicherungseinrichtung durch eine Verlagerung eines ihrer Elemente in Achsrichtung der Schwenkachse in eine das Verschwenken in die Verwahrstellung ermöglichende Freigabestellung bringbar ist.

Eine Transportkarre mit einem Tragegestell, welches einen U-förmigen Rahmen aufweist, zeigt die DE 90 02 279 U1. An den Enden eines zu einem U gebogenen Rohrs ist eine Schüppe angeordnet, die ein Lastaufnahmemittel ausbildet. Im Bereich der Enden der beiden U-Schenkel sind am Tragegestell Radträger befestigt, die jeweils ein Rad tragen. Die Radträger sind an Griffstangen befestigt, die an ihren freien Enden Griffhandhaben ausbilden, die von einer Gebrauchsstellung in eine Verwahrstellung verschwenkt werden können. Einhergehend mit diesem Verschwenken der Griffhandhaben werden auch die Radträger von einer Verwahrstellung in eine Gebrauchsstellung verschwenkt. Die Radträger werden in der Gebrauchsstellung bzw. in der Verwahrstellung jeweils über Fesselungsmittel am Gestell gefesselt, so dass sie sich nur willensbetont von der einen in die andere Stellung verschwenken lassen. Hierzu muss die gesamte -Handgriffanordnung in Achsrichtung gegen die Rückstellkraft einer Rückstellfeder verlagert werden. Dabei werden Fesselungsmittel außer Eingriff gebracht, die ansonsten von der Rückstellfeder im Eingriff gehalten werden.

Die DE 20010856 U1 beschreibt einen Kinderwagen mit zwei Rahmenrohren, an denen jeweils endseitig ein schwenkbarer Griff angeordnet ist. Der Griff träger ist drehfest mit einem Verbindungsrohr verbunden, welches in das Rahmenrohr hineinragt. Auf dem Verbindungsrohr ist eine Verriegelungshülse relativ gegenüber dem Griffträger axial verschieblich.

Die DE 10 2004038853 A1 beschreibt ebenfalls eine Griffanordnung an einem Kinderwagen. Die Verriegelungseinrichtung ist hier ein dem Griffträger zugeordneter Schwenkhebel.

Der Erfindung liegt die Aufgabe zugrunde, die gattungsgemäße Transportkarre gebrauchsvorteilhaft weiterzubilden.

Gelöst wird die Aufgabe durch die in Anspruch 1 angegebenen Merkmale. Bevorzugte Weiterbildungen ergeben sich aus den abhängigen Ansprüchen. Zunächst und im Wesentlichen wird vorgeschlagen, dass die Drehsicherungseinrichtung, die die Handgriffanordnung in der Gebrauchsstellung hält, ein gegenüber dem Tragegestell bzw. Handgriffanordnung axial verlagerbares Verriegelungsglied aufweist. Dieses Verriegelungsglied ist ein Element der Drehsicherungseinrichtung, verriegelt in einer Verriegelungsstellung die Handgriffanordnung. Das Verriegelungsglied wird bevorzugt von einer Kraft in der Verriegelungsstellung gehalten, die überwunden werden muss, um das Verriegelungsglied in die Freigabestellung zu verlagern. Die Kraft wird bevorzugt von einer Feder erzeugt. In der Freigabestellung ist die Handgriffanordnung lediglich drehbar. Sie kann gegenüber dem Tragegestell nicht axial verlagert werden. Das Verriegelungsglied bewirkt in seiner Verriegelungsstellung eine drehfeste Verbindung der Handgriffanordnung mit dem Tragegestell. Es stellt zwischen Tragegestell und Handgriffanordnung Formschlussverbindung her. Es ist sowohl gegenüber dem Tragegestell, als auch gegenüber der Handgriffanordnung verschieblich. Es wird als vorteilhaft angesehen, wenn das Verriegelungsglied ein Drehmomentübertragungsglied ist, mit welchem auf die Handgriffanordnung ausgeübte Drehmomente in das Tragegestell übertragen werden. Die Drehsicherungseinrichtung ist so ausgebildet, dass sich die Handgriffanordnung nur willensbetont und nach Verlagerung der Drehsicherungseinrichtung in eine Freigabestellung verschwenken lässt. In einer Weiterbildung der Erfindung ist vorgesehen, dass das Verriegelungsglied eine Verriegelungshülse aufweist. Die Verriegelungshülse kann gegenüber einem Lagerungsglied, welches insbesondere von einer Hülse ausgebildet ist, in Achsrichtung, bezogen auf die Schwenkachse der Handgriffanordnung, verlagerbar sein. Das Lagerungsglied kann dabei die Rückstellfeder abstützen, gegen die das Verriegelungsglied verlagerbar ist und welche das Verriegelungsglied in der Drehsicherungsstellung hält. Das Lagerungsglied kann bspw. über einen Stift mit dem Tragegestell dreh- und verschiebefest verbunden sein. Das Verriegelungsglied kann permanent drehfest an das Lagerungsglied gekoppelt sein. Es sind vorzugsweise Formschlusseingriffsmittel vorgesehen, mit denen das Verriegelungsglied und das Lagerungsglied drehfest, aber axialverschieblich aneinander gekoppelt sind. Die Verriegelungshülse kann in ihrer Höhlung Nuten aufweisen, die in axialer Erstreckungsrichtung verlaufen. In diesen Nuten können Rippen des Lagerungsgliedes eingreifen. Die Rippen können dabei an einer Außenmantelfläche eines Führungsabschnittes angeordnet sein. Die Rippen können endseitig Stufen ausbilden, an denen sich ein Ende der Rückstellfeder abstützt. Das andere Ende der Rückstellfeder stützt sich an einer innerhalb der Höhlung der Verriegelungshülse angeordneten Stufe ab. Das Verriegelungsglied kann aber auch drehfest der Handgriffanordnung und insbesondere einem Griffträger zugeordnet sein. Es greift dann in der Verriegelungsstellung in eine Verzahnung des Lagerungsgliedes ein, wobei dieser Zahneingriff in der Freigabestellung aufgehoben ist, so dass die Handgriffanordnung von der Gebrauchsstellung, in der ein Handgriff der Handgriffanordnung seitlich vom Tragrahmen abragt, in eine Verwahrstellung schwenkbar ist, in der der Handgriff in den Tragrahmen eingeschwenkt ist. Der Griffträger ist vorzugsweise zwischen einem oberen Lagerungsglied und einem unteren Lagerungsglied drehbar, aber axialfest gelagert. Vorzugsweise ist der Griffträger an einem vom Tragegestell ausgebildeten Rohr gelagert. Es handelt sich dabei bevorzugt um ein U-förmiges Rohr, an dessen unteren Enden Radträger befestigt sind, die jeweils ein Rad tragen. Es sind vorzugsweise zwei Handgriffanordnungen vorgesehen, die zueinander spiegelsymmetrisch jeweils an einem U-Schenkel des U-förmigen Rohres schwenkbar angeordnet sind. In der Gebrauchsstellung weisen die beiden Griffe der Handgriffanordnungen im Wesentlichen voneinander weg. In der Verwahrstellung weisen die Griffe jeweils im Wesentlichen aufeinander zu. An den unteren Enden des U-förmigen Rohres ist darüber hinaus eine Schüppe angeordnet. Schüppe und Radträger können von einer Gebrauchsstellung in eine Verwahrstellung verschwenkt werden, wobei die Schwenkachse der Radträger parallel zu den Schwenkachsen der Griffträger verläuft und die Schwenkachse der Schüppe quer zu diesen Schwenkachsen verläuft. Der Abstand der Radträger voneinander ist vorzugsweise größer als der Abstand der Griffträger voneinander. Zwischen Griffträger und Verriegelungshülse sind Formschlusseingriffsmittel vorgesehen, die in der Fesselungsstellung in Eingriff miteinander stehen, und die durch Axialverlagerung der Verriegelungshülse außer Eingriff gebracht werden. Die Formschlusseingriffsmittel weisen insbesondere eine Ausnehmung auf, in die ein Vorsprung eingreift. Bevorzugt greifen die Formschlusseingriffsmittel zahnartig ineinander. Die Formschlusseingriffsmittel sind bevorzugt so gestaltet, dass sie die Handgriffanordnung nicht nur in der Gebrauchsstellung, sondern auch in der Verwahrstellung schwenkfest an das Tragegestell fesseln. Es sind bevorzugt zwei Fesselungsvorsprünge vorgesehen, die einen Winkelabstand voneinander besitzen, der dem Schwenkwinkel der Handgriffanordnung von der Gebrauchsstellung in die Verwahrstellung entspricht. Die Formschlusseingriffsmittel weisen bevorzugt drei Fesselungsausnehmungen auf, die so angeordnet sind, dass die Fesselungsvorsprünge in der Verwahrstellung bzw. in der Gebrauchsstellung jeweils in zwei der Fesselungsausnehmungen einliegen. Zwischen den Fesselungsausnehmungen erstrecken sich Umfangsstege, die eine verschieden starke Materialstärke in Radialrichtung besitzen. Den Umfangsstegen sind zwischen den Fesselungsvorsprüngen angeordnete Ausnehmungen zugeordnet. Die Umfangsstege können bei der Axialverlagerung nur in solche Umfangsausnehmungen eintreten, die ihrer radialen Breite entsprechen, so dass die Handgriffanordnung nur in zwei Schwenkstellungen gegenüber dem Tragegestell verrastbar ist.

Ein Ausführungsbeispiel der Erfindung wird nachfolgend anhand beigefügter Zeichnungen erläutert. Es zeigen:
- Fig. 1: eine Transportkarre in der Gebrauchsstellung in einer perspektivischen Darstellung,

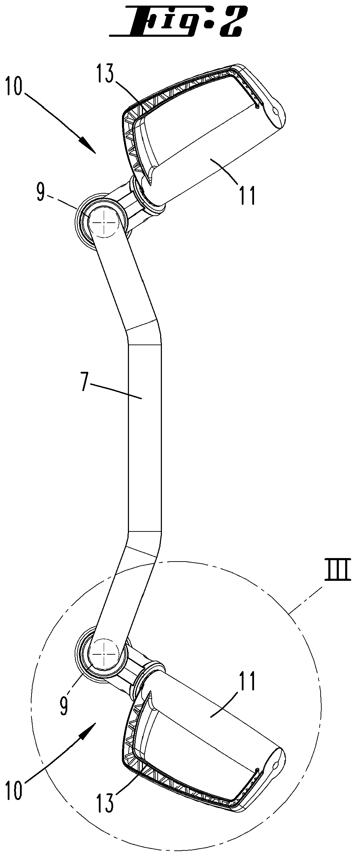

- Fig. 2: eine Draufsicht auf den Ausschnitt II in Fig. 1,

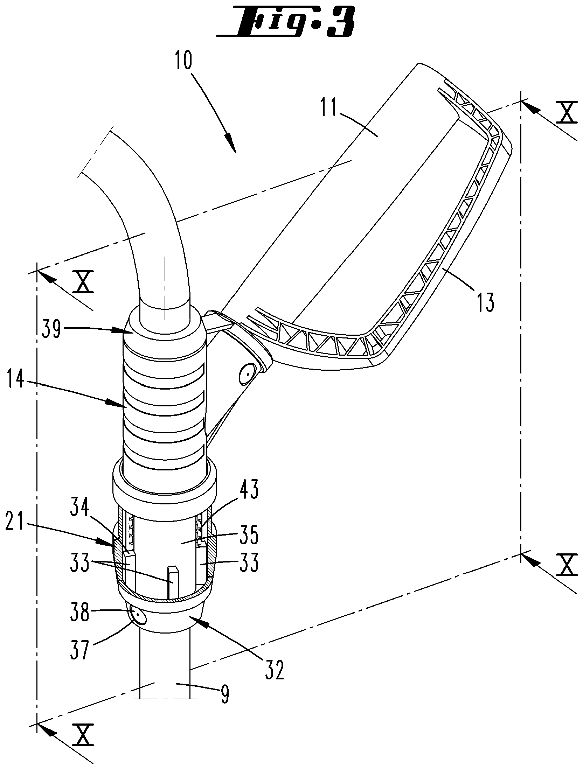

- Fig. 3: den in Fig. 2 mit III gekennzeichneten Ausschnitt,

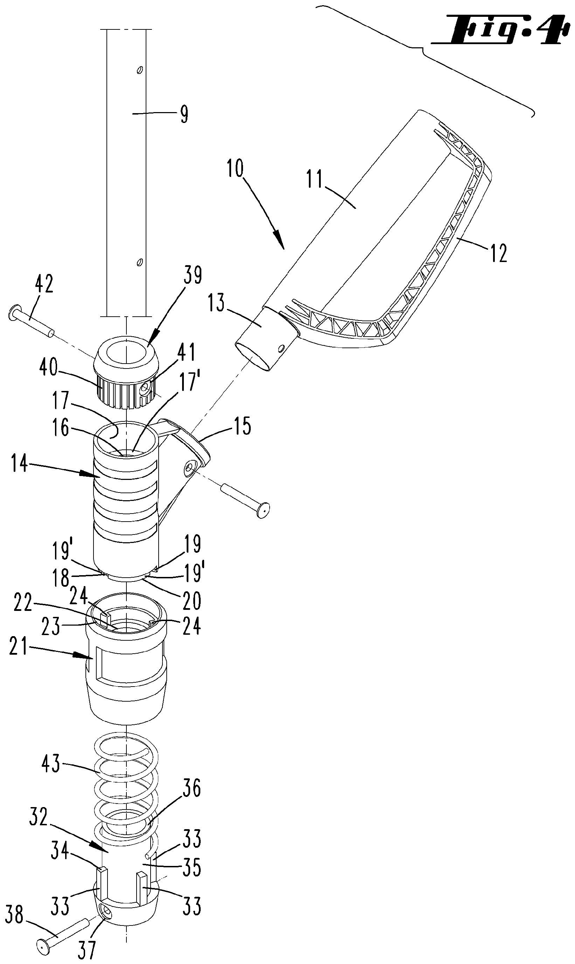

- Fig. 4: eine Explosionsdarstellung der Griffanordnung mit Verriegelungshülse und Lagerhülsen,

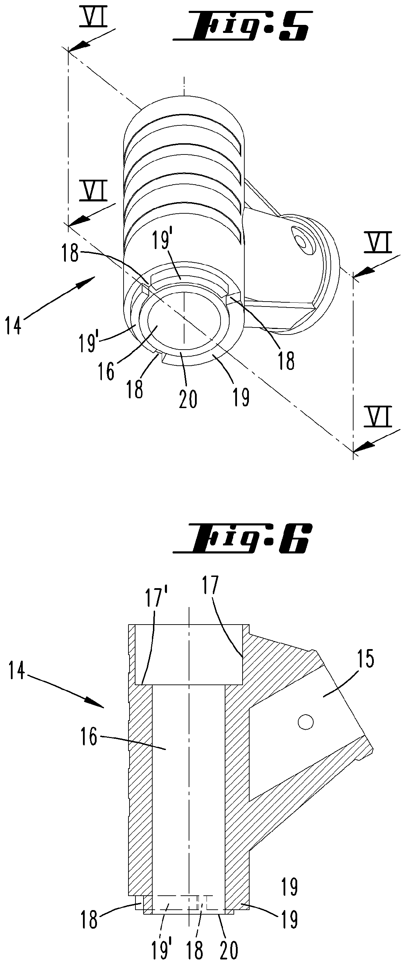

- Fig. 5: eine perspektivische Darstellung eines Griffträgers 14,
- Fig. 6: den Schnitt gemäß der Linie VI-VI in Fig. 5,

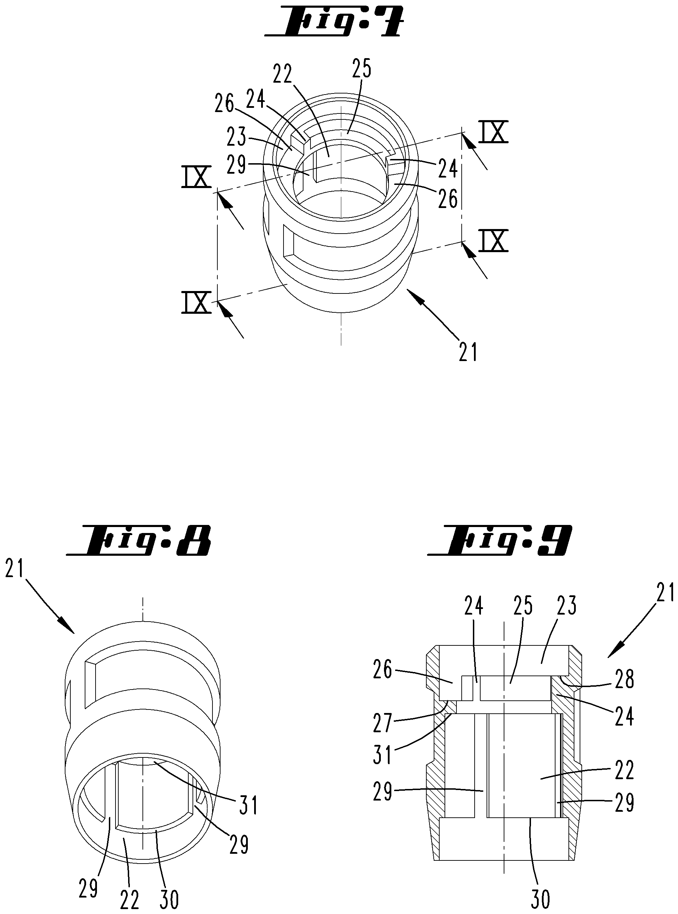

- Fig. 7: eine erste perspektivische Darstellung der Verriegelungshülse 21,
- Fig. 8: eine zweite perspektivische Darstellung der Verriegelungshülse 21,
- Fig. 9: den Schnitt gemäß der Linie IX-IX in Fig. 7,
- Fig. 10: den Schnitt gemäß der Linie X-X in Fig. 3,
- Fig. 11: den Schnitt gemäß der Linie XI-XI, wobei die Handgriffanordnung ihre Gebrauchsstellung einnimmt,

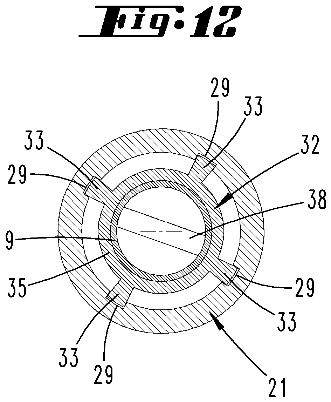

- Fig. 12: den Schnitt gemäß der Linie XII-XII in Fig. 10,
- Fig. 13: einen Schnitt gemäß Fig. 10, jedoch mit von der Verriegelungsstellung in die Freigabestellung gebrachter Verriegelungshülse 21,
- Fig. 14: eine Darstellung gemäß Fig. 11, jedoch in der Verwahrstellung, und
- Fig. 15: eine perspektivische Darstellung der Transportkarre, wobei die Handgriffanordnung 10 die Schüppe 2 und die beiden Radträger 5 jeweils in ihre Verwahrstellung gebracht worden sind.

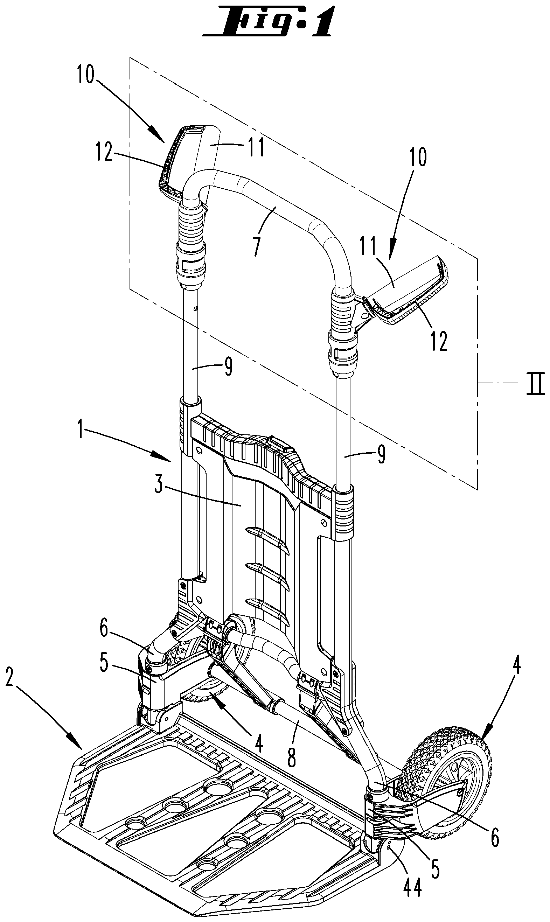

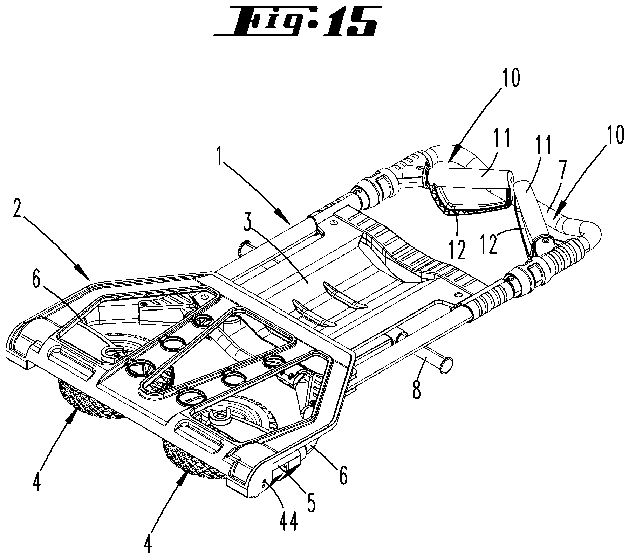

Die in den Zeichnungen dargestellte Transportkarre ist eine Weiterentwicklung einer in der DE 102 60 719 A1 beschriebenen Transportkarre, die ein Tragegestell 1 aufweist, welches von einem U-förmigen Rohr 9 gebildet ist, dessen U-Schenkel teleskopierbar in jeweils einem Tragrohr stecken, welche Tragrohre im Wesentlichen Z-förmig gebogen sind und an ihren freien Enden Schwenkachsen 6 ausbilden, an denen Radträger 5 befestigt sind, die jeweils ein Rad 4 tragen. Die Radträger werden mittels einer Stabilisierungsstange 8 in einer Gebrauchsstellung gehalten. Die beiden Enden der Schwenkachsen 6, also des Tragegestells 1, lagern eine um ein Schwenklager 44 schwenkbare Schüppe 2. Die Radträger 5 und die Schüppe 2 können von der in Figur 1 dargestellten Gebrauchsstellung in die in Figur 15 dargestellte Verwahrstellung gebracht werden, in der sich die Schüppe 2 und die Radträger 5 parallel zu einer Tragplatte 3 erstrecken, die zwischen den beiden U-Schenkeln 9 des Tragegestells 1 angeordnet ist.

Die DE 10 2005 034 313 A1 beschreibt eine Transportkarre, die ebenfalls zwei von einem Radträger getragene Räder aufweist, die an den freien Enden der U-Schenkel eines U-förmigen Rahmens angeordnet sind. An den den Rahmen ausbildenden Rohren sind Griffträger 14 angeordnet. Sie weisen eine Lagerhöhlung 16 auf, durch die das Rahmenrohr 9 hindurchragt. Es ist eine schräg abragende Einstecköffnung 15 vorgesehen, in der ein Einsteckabschnitt 13 eines Griffs 11 steckt, der einen Schutzbügel 12 trägt.

Die in den Zeichnungen dargestellte Transportkarre besitzt einen Tragrahmen 1, der einen U-förmigen Rohrbügel 9 besitzt, dessen Rohrschenkel in Tragrohren stecken. Zwischen den beiden parallel zueinander verlaufenden Tragrohren erstreckt sich eine Tragplatte 3. Der U-Steg des Tragrahmens 1 bildet einen als Griff verwendbaren Verbindungssteg 7. Die freien Enden 6 des Rohrrahmens 1 verlaufen parallel zueinander und tragen jeweils Radträger 5 bzw. an ihren Enden eine um das Schwenklager 44 schwenkbare Schüppe 2.

In der Nähe des Verbindungssteges 7 sind Handgriffanordnungen 10 vorgesehen, die jeweils einen Griff 11 tragen, der mit einem Einsteckabschnitt 13 in einer Einstecköffnung 15 eines Griffträgers 14 steckt.

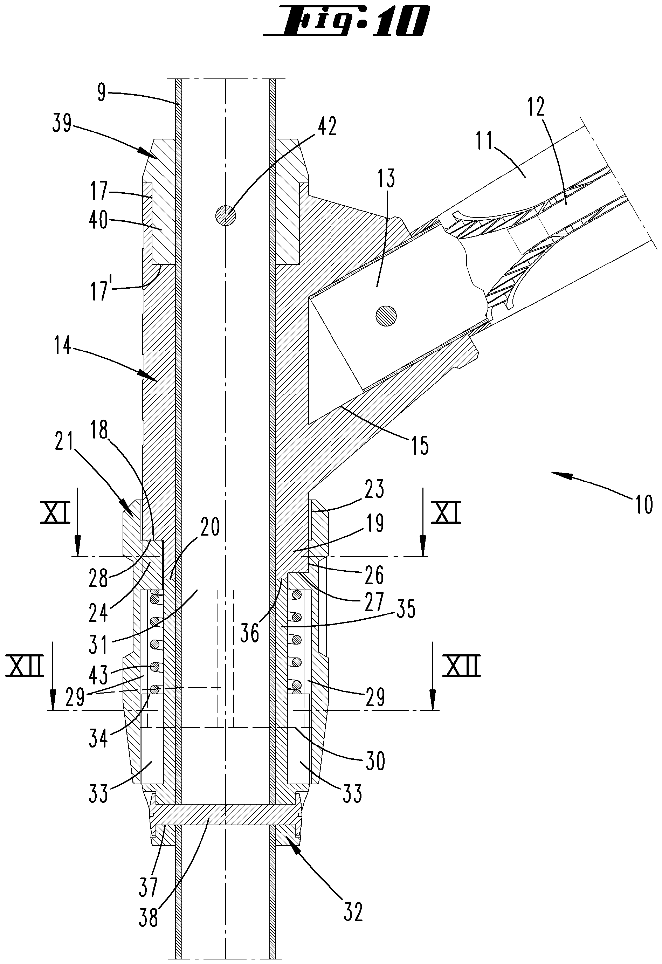

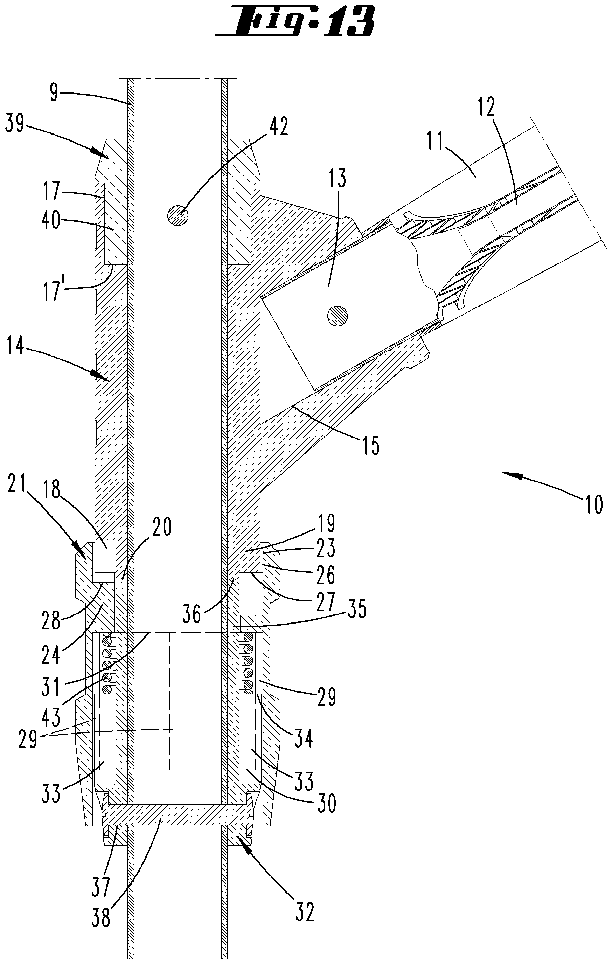

Wie den Figuren 10 und 13 zu entnehmen ist, ist eine obere Lagerhülse 39, die aus Kunststoff besteht, mit einem Stift 42 dreh- und axialfest mit dem Rohr 9 verbunden. Die obere Lagerhülse 39 bildet einen durchmesserverminderten Führungsabschnitt 40 aus.

Der Griffträger 14 bildet eine Lagerhöhlung 16 aus, deren Mantelwand an der Umfangsmantelwand des Rohres 9 anliegt. Der ringförmige Boden 17' des durchmesservergrößerten Abschnittes 17 der Lagerhöhle 16 liegt an der Stirnfläche des Führungsabschnittes 40 an. Der Führungsabschnitt 40 steckt in dem durchmesservergrößerten Abschnitt 17. Der vom Boden 17' ausgebildeten Stirnfläche liegt die Stirnfläche 20 gegenüber, die von einer Ringstufe ausgebildet ist. Die Stirnfläche 20 kann sich dabei an einer Stirnfläche 36 einer unteren Lagerhülse 32 abstützen. Es reicht jedoch aus, wenn zwischen Stirnfläche 36 und Stirnfläche des Führungsabschnittes 40 ein ausreichender Abstand vorhanden ist, um den Griffträger 14 spielfrei bzw. mit geringem Spiel zwischen oberer Lagerhülse 39 und unterer Lagerhülse 32 zu lagern. Die untere Lagerhülse 32 ist ebenfalls aus Kunststoff gefertigt. Sie ist mit Hilfe eines Stiftes 38, der Bohrungen 37 durchsetzt, axial und drehfest am Rohr 9 befestigt.

Die untere Lagerhülse 32 trägt eine Verriegelungshülse 21. Die Verriegelungshülse 21 besitzt eine Höhlung 22, die einen rohrförmigen Führungsabschnitt 35 der unteren Lagerhülse 32 umgibt. Im unteren Bereich bildet die untere Lagerhülse 32 sich in ihrer Erstreckungsrichtung verlaufende Rippen 33 aus, die in Radialrichtung von dem Führungsabschnitt 35 abstehen, dessen Stirnrand die Stufe 36 ausbildet, an der sich die Ringstufe 20 des Griffträgers 14 abstützt.

An den Stirnflächen 34 der Rippen 33 stützt sich ein Ende einer Wendelgangdruckfeder 43 ab. Die Wendeln der Wendelgangdruckfeder befinden sich radial außerhalb des Führungsabschnittes 35 und liegen in der Höhlung 22 der Verriegelungshülse 21. Das andere Ende der Wendelgangdruckfeder 43 stützt sich an einer Ringstufe 31 der Verriegelungshülse 21 ab. Die Rippen 33 greifen in von einer Stufe 30 ausgehende Nuten 29 der Höhlung 22 der Verriegelungshülse 21 ein, so dass die Verriegelungshülse 21 gegen die Rückstellkraft der Feder 43 axial gegenüber der unteren Lagerhülse 32 verlagert werden kann. Zufolge der in die Nuten 29 eingreifenden Rippen 33 kann die Verriegelungshülse 21 aber nicht gegenüber der unteren Lagerhülse 32 verdreht werden.

Die Stufe 31, an der sich die Druckfeder 43 abstützt, wird von einem Ringstegabschnitt ausgebildet. Die zur Stufe 31 wegweisende Seite bildet eine Anschlagstufe 27 eines Freiraumes 26. In den Freiraum 26 ragen winkelversetzt zueinander zwei Stege 24, die Fesselungsvorsprünge ausbilden. Die beiden von der Wandung einer Verriegelungsabschnittshöhlung 23 ausgehenden Radialstege 24 sind mit einem an der Wand entlanglaufenden Bogensteg 25' miteinander verbunden, der einen radial einwärts gerichteten Freiraum begrenzt, dessen radiale Erstreckung geringer ist, als der Freiraum 26, der eine größere Bogenlänge aufweist als der Freiraum 25.

Der Fig. 10 ist zu entnehmen, dass ein Verriegelungsvorsprung des Griffträgers 14 in die Verriegelungsabschnittshöhlung 23 der Verriegelungshülse 21 eintaucht. Er besitzt insgesamt 3 Fesselungsausnehmungen 18, die jeweils von einem ersten bogenförmigen Steg 19' voneinander getrennt sind. Der erste Steg 19' besitzt eine derartige radiale Erstreckung, dass er in den schmalen Freiraum 25 zwischen den beiden Fesselungsvorsprüngen 24 eintreten kann. Ein zweiter Bogensteg 19 besitzt eine größere Bogenlänge und eine größere radiale Materialstärke als jeder der beiden ersten Bogenstege 19'. Der zweite Bogensteg 19 besitzt aber eine geringere Bogenlänge als der Freiraum 26, in den der zweite Bogensteg 19 aber ansonsten hineinpasst.

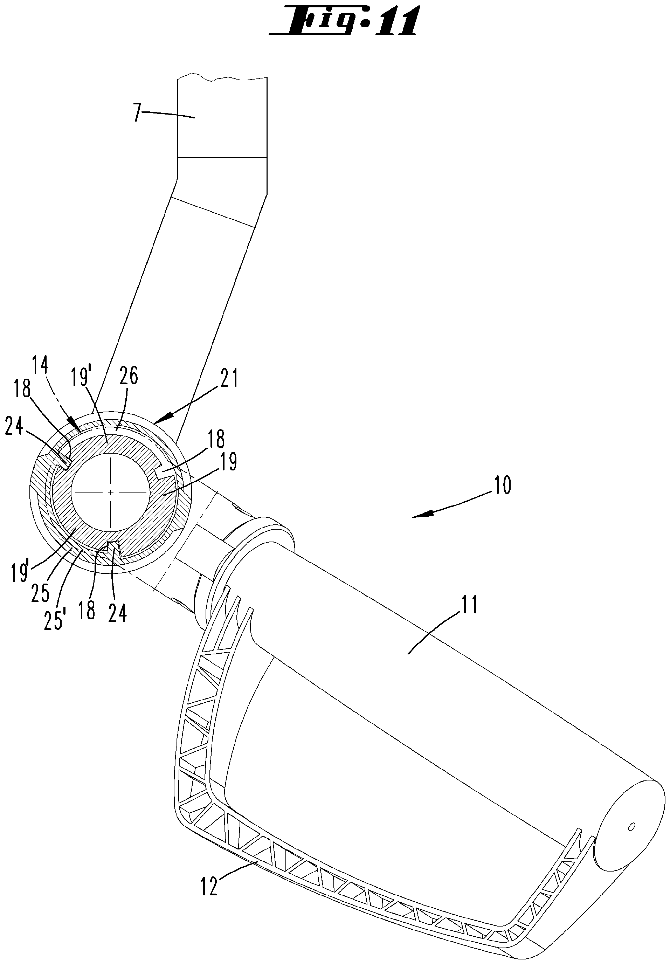

Die Fig. 11 zeigt die Formschlussverbindung zwischen Griffträger 14 und unterer Lagerhülse 32 in der Gebrauchsstellung (siehe auch Fig. 1). Einer der beiden schmäleren Stege 19' liegt dabei im schmalen Freiraum 25. Zwei Fesselungsvorsprünge 24 liegen jeweils in Fesselungsausnehmungen 18 ein. In der dritten Fesselungsausnehmung 18 liegt kein Fesselungsvorsprung 24 ein.

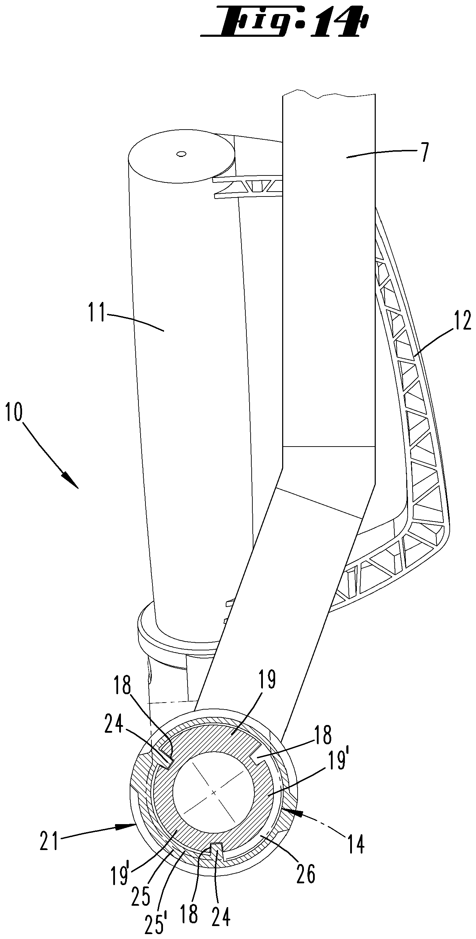

Wie aus der Fig. 10 hervorgeht, wird die Verriegelungshülse 21 von der vorgespannten Feder 43 in der Verriegelungsstellung gehalten. Wird die Verriegelungshülse 21 in Achsrichtung nach unten verschoben, bis sie ihre in der Fig. 13 dargestellte Freigabestellung erreicht hat, so treten die Fesselungsausnehmungen 18 aus den Fesselungsvorsprüngen 24, so dass sich der jetzt frei drehbare Griffträger 14 von der Gebrauchsstellung (Fig. 11) in die Verwahrstellung (Fig. 14) verschwenken lässt. Während des Verschwenkens kann die Verriegelungshülse 21 freigegeben werden. Die Fesselungsvorsprünge 24 stützen sich während des Verschwenkens auf den Stegen 19, 19' ab. Erst wenn nach einer Drehung des Griffträgers 14 im Gegenuhrzeigersinn die in der Fig. 14 dargestellte Verwahrstellung erreicht ist, verlagert sich die Verriegelungshülse 21 durch die Kraft der Feder 43 in die Fesselungsstellung, wobei die Fesselungsvorsprünge 24 in andere Fesselungsausnehmungen 18 eintreten. Es liegt jetzt ein anderer der beiden radial schmaleren Stege 19' im radial verschmälerten Freiraum 25 ein.

Die vorstehenden Ausführungen dienen der Erläuterung von Ausführungsbeispielen, die den Stand der Technik zumindest durch die folgenden Merkmalskombinationen jeweils eigenständig weiterbilden, nämlich:
Eine Transportkarre, die dadurch gekennzeichnet ist, dass die Handgriffanordnung 10 in Achsrichtung unverlagerbar am Traggestell 1 befestigt ist und das Verriegelungsglied 21 gegenüber der Handgriffanordnung 10 in Achsrichtung von einer Verriegelungsstellung in eine Freigabestellung verlagerbar ist.

Eine Transportkarre, die dadurch gekennzeichnet ist, dass das Verriegelungsglied als Verriegelungshülse 21 gestaltet ist.

Eine Transportkarre, die dadurch gekennzeichnet ist, dass das Verriegelungsglied gegen eine sich an einem dreh- und verschiebefest dem Tragegestell 1 zugeordneten Führungsglied 32 abstützende Rückstellfeder 43 verschieblich ist.

Eine Transportkarre, die dadurch gekennzeichnet ist, dass das Verriegelungsglied 21 mit Formschlusseingriffsmitteln 29, 33 drehfest, aber axial verschieblich dem Führungsglied 32 oder der Handgriffanordnung 10 zugeordnet ist, wobei insbesondere mindestens eine Rippe 33 in eine Nut 29 eingreift.

Eine Transportkarre, die dadurch gekennzeichnet ist, dass eine das Führungsglied ausbildende Lagerhülse 32 Rippen 33 aufweist, die Stufen 34 ausbilden, an denen sich die einen Führungsabschnitt 35 umgebende Rückstellfeder 43 abstützt.

Eine Transportkarre, die dadurch gekennzeichnet ist, dass ein Griffträger 14 zwischen einem oberen Führungsglied 39 und einem unteren Führungsglied 32 drehbar, aber axialfest angeordnet ist.

Eine Transportkarre, die dadurch gekennzeichnet ist, dass der Griffträger 14 und das Verriegelungsglied 21 über Formschlusseingriffsmittel 18, 24, insbesondere in Form einer Verzahnung miteinander zusammenwirken.

Eine Transportkarre, die dadurch gekennzeichnet ist, dass das Verriegelungsglied 21 von einer insbesondere von einer Feder 43 erzeugte Kraft in der Verriegelungsstellung gehalten wird.

Eine Transportkarre, die dadurch gekennzeichnet ist, dass die Formschlusseingriffsmittel 18, 24 mindestens eine Ausnehmung 18 ausbilden zum Eintritt eines Vorsprungs 24.

Eine Transportkarre, die dadurch gekennzeichnet ist, dass die Handgriffanordnung 10 sowohl in der Verwahrstellung, als auch in der Gebrauchsstellung vom Verriegelungsglied 21 schwenkblockiert sind, wobei insbesondere ein oder mehrere Vorsprünge 24 in voneinander verschiedene Ausnehmungen 18 eintreten.

Eine Transportkarre, die dadurch gekennzeichnet ist, dass ein Stirnrand 20 des Griffträgers 14 an einem Stirnrand 36 einer unteren Lagerhülse 32 anliegt und ein Stirnrand 17' des Griffträgers 14 an einem Stirnrand einer oberen Lagerhülse (9)anliegt, wobei die Lagerhülsen 32, 39 drehfest und axialfest an einem von einem Rohr gebildeten Grifflager 9 befestigt sind.

Eine Transportkarre, die dadurch gekennzeichnet ist, dass das Tragegestell ein U-förmiges Rohr 9 ausbildet, wobei die beiden Griffträger 14 an den beiden U-Schenkeln befestigt sind.

Eine Transportkarre, die gekennzeichnet ist durch eine axialfest am Tragegestell 1 angeordnete, um ein Schwenklager 44 schwenkbare Schüppe 22.

Eine Transportkarre, die gekennzeichnet ist durch zwei jeweils an einem Radträger 5 axialfest befestigte Räder 6, wobei die beiden Radträger 5 um eine Schwenkachse 6 schwenkbar aber axialfest am Tragegestell 1 befestigt sind.

**Bezugszeichenliste**

| | | | |
|---|---|---|---|
| 1 | Tragegestell | 23 | Verriegelungsabschnittshöhlung |
| 2 | Schüppe | 24 | Fesselungsvorsprung |
| 3 | Tragplatte | 25 | Freiraum |
| 4 | Rad | 25' | Steg |
| 5 | Radträger | 26 | Freiraum |
| 6 | Schwenkachse | 27 | Anschlagstufe |
| 7 | Verbindungssteg | 28 | Anschlagstufe |
| 8 | Stabilisierungssteg | 29 | Nut |
| 9 | Grifflager/Rohr | 30 | Stufe |
| 10 | Handgriffanordnung | 31 | Stufe |
| 11 | Griff | 32 | untere Lagerhülse |
| 12 | Schutzbügel | 33 | Rippe |
| 13 | Einsteckabschnitt | 34 | Stufe |
| 14 | Griffträger | 35 | Führungsabschnitt |
| 15 | Einstecköffnung | 36 | Stufe |
| 16 | Lagerhöhlung | 37 | Bohrung |
| 17 | Lagerhöhlung | 38 | Stift |
| 17' | Boden | 39 | obere Lagerhülse |
| 18 | Fesselungsausnehmung | 40 | Führungsabschnitt |
| 19 | Freiraum | 41 | Bohrung |
| 19' | Steg | 42 | Stift |
| 20 | Stirnfläche | 43 | Feder |
| 21 | Verriegelungshülse | 44 | Schwenklager |
| 22 | Höhlung | | |

## Patentansprüche

1. Transportkarre mit einem Traggestell (1), an dem mindestens eine Handgriffanordnung (10) befestigt ist, die um eine Schwenkachse (9) von einer Verwahrstellung in eine Gebrauchsstellung schwenkbar ist, in der die Handgriffanordnung (10) mit einer Drehsicherungseinrichtung (18, 21, 24, 29, 32, 33) gegen Verschwenken gesichert ist, wobei die Drehsicherungseinrichtung (18, 21, 24, 29, 32, 33) durch eine Verlagerung eines Verriegelungsgliedes in Achsrichtung der Schwenkachse (9) in eine das Verschwenken in die Verwahrstellung ermöglichende Freigabestellung bringbar ist, wobei die Handgriffanordnung (10) einen Griffträger (14) mit einer Lagerhöhlung (16) aufweist, durch die ein Rahmenrohr (9) des Traggestells ragt und der Griffträger (14) drehbar aber in Achsrichtung unverlagerbar zwischen einem oberen und einem unteren, mit dem Rahmenrohr (9) verbundenen Führungsglied (39,32) angeordnet ist und wobei das drehfest aber axial verschieblich am Führungsglied (32) angeordnete Verriegelungsglied (21) gegenüber der Handgriffanordnung (10) in Achsrichtung von einer Verriegelungsstellung in eine Freigabestellung verlagerbar ist.

2. Transportkarre nach Anspruch 1, **dadurch gekennzeichnet, dass** das Verriegelungsglied als Verriegelungshülse (21) gestaltet ist.

3. Transportkarre nach Anspruch 1 oder 2, **dadurch gekennzeichnet, dass** das Verriegelungsglied gegen eine sich an dem dreh- und verschiebefest dem Tragegestell (1) zugeordneten Führungsglied (32) abstützende Rückstellfeder (43) verschieblich ist.

4. Transportkarre nach einem der Ansprüche 1 bis 3, **dadurch gekennzeichnet, dass** das Verriegelungsglied (21) mit Formschlusseingriffsmitteln (29, 33) drehfest, aber axial verschieblich dem Führungsglied (32) oder der Handgriffanordnung (10) zugeordnet ist, wobei insbesondere mindestens eine Rippe (33) in eine Nut (29) eingreift.

5. Transportkarre nach Anspruch 3 oder 4, **dadurch gekennzeichnet, dass** eine das Führungsglied ausbildende Lagerhülse (32) Rippen (33) aufweist, die Stufen (34) ausbilden, an denen sich die einen Führungsabschnitt (35) umgebende Rückstellfeder (43) abstützt.

6. Transportkarre nach einem der Ansprüche 1 bis 5, **dadurch gekennzeichnet, dass** der Griffträger (14) und das Verriegelungsglied (21) über Formschlusseingriffsmittel (18, 24), insbesondere in Form einer Verzahnung miteinander zusammenwirken.

7. Transportkarre nach einem der Ansprüche 1 bis 6, **dadurch gekennzeichnet, dass** das Verriegelungsglied (21) von einer insbesondere von einer Feder (43) erzeugte Kraft in der Verriegelungsstellung gehalten wird.

8. Transportkarre nach einem der Ansprüche 6 oder 6 und 7, **dadurch gekennzeichnet, dass** die Formschlusseingriffsmittel (18, 24) mindestens eine Ausnehmung (18) ausbilden zum Eintritt eines Vorsprungs (24).

9. Transportkarre nach einem der Ansprüche 1 bis 8, **dadurch gekennzeichnet, dass** die Handgriffanordnung (10) sowohl in der Verwahrstellung, als auch in der Gebrauchsstellung vom Verriegelungsglied (21) schwenkblockiert sind, wobei insbesondere ein oder mehrere Vorsprünge (24) in voneinander verschiedene Ausnehmungen (18) eintreten.

10. Transportkarre nach einem der Ansprüche 1 bis 9, **dadurch gekennzeichnet, dass** ein Stirnrand (20) des Griffträgers (14) an einem Stirnrand (36) einer unteren Lagerhülse (32) anliegt und ein Stirnrand (17') des Griffträgers (14) an einem Stirnrand einer oberen Lagerhülse (39) anliegt, wobei die Lagerhülsen (32,39) drehfest und axialfest an einem von einem Rohr gebildeten Grifflager (9) befestigt sind.

11. Transportkarre nach einem der Ansprüche 1 bis 10, **dadurch gekennzeichnet, dass** das Tragegestell ein U-förmiges Rohr (9) ausbildet, wobei die beiden Griffträger (14) an den beiden U-Schenkeln befestigt sind.

12. Transportkarre nach einem der Ansprüche 1 bis 11, **gekennzeichnet durch** eine axialfest am Tragegestell (1) angeordnete, um ein Schwenklager (44) schwenkbare Schüppe (22).

13. Transportkarre nach einem der Ansprüche 1 bis 12, **gekennzeichnet durch** zwei jeweils an einem Radträger (5) axialfest befestigte Räder (6), wobei die beiden Radträger (5) um eine Schwenkachse (6) schwenkbar aber axialfest am Tragegestell (1) befestigt sind.

## Claims

1. Transport cart comprising a support frame (1) to which at least one grab handle arrangement (10) is attached, which can be pivoted about a pivot shaft (9) from a storage position into a usage position in which the grab handle arrangement (10) is prevented from pivoting by an anti-turn device (18, 21, 24, 29, 32, 33), wherein the anti-turn device (18, 21, 24, 29, 32, 33) can be brought into a released position, which allows pivoting into the storage position, by moving a locking member in the axial direction of the pivot shaft (9), wherein the grab handle arrangement (10) comprises a handle holder (14) having a bearing cavity (16) through which a frame tube (9) of the support frame projects, and the handle holder (14) is arranged between upper and lower guide members (39, 92), which are connected to the frame tube (9), so as to be rotatable but non-movable in the axial direction, and wherein the locking member (21), which is non-rotatably but axially movably arranged on the guide member (32), can be moved, with respect to the grab handle arrangement (10), in the axial direction from a locked position into a released position.

2. Transport cart according to claim 1, **characterised in that** the locking member is designed as a locking sleeve (21).

3. Transport cart according to either claim 1 or claim 2, **characterised in that** the locking member can be moved counter to a restoring spring (43) that is supported on the guide member (32) which is non-rotatably and non-movably associated with the support frame (1).

4. Transport cart according to any of claims 1 to 3, **characterised in that** the locking member (21) having form-fit engagement means (29, 33) is non-rotatably but axially movably associated with the guide member (32) or with the grab handle arrangement (10), in particular at least one rib (33) engaging in a groove (29).

5. Transport cart according to either claim 3 or claim 4, **characterised in that** a bearing sleeve (32) forming the guide member comprises ribs (33) that form steps (34) on which the restoring spring (43) that surrounds a guide portion (35) is supported.

6. Transport cart according to any of claims 1 to 5, **characterised in that** the handle holder (14) and the locking member (21) interact by means of form-fit engagement means (18, 24), in particular in the form of a toothing.

7. Transport cart according to any of claims 1 to 6, **characterised in that** the locking member (21) is held in the locked position by a force generated in particular by a spring (43).

8. Transport cart according to any of claims 6 or 6 and 7, **characterised in that** the form-fit engagement means (18, 24) form at least one recess (18) for the entry of a projection (24).

9. Transport cart according to any of claims 1 to 8, **characterised in that** the grab handle arrangement (10) is stopped from pivoting in both the storage position and the usage position of the locking member (21), in particular one or more projections (24) engaging in recesses (18) that are separate from one another.

10. Transport cart according to any of claims 1 to 9, **characterised in that** an end edge (20) of the handle holder (14) abuts an end edge (36) of a lower bearing sleeve (32), and an end edge (17') of the handle holder (14) abuts an end edge of an upper bearing sleeve (39), the bearing sleeves (32, 39) being attached, in a non-rotatable and axially fixed manner, to a handle bearing (9) formed by a tube.

11. Transport cart according to any of claims 1 to 10, **characterised in that** the support frame forms a U-shaped tube (9), the two handle holders (14) being attached to the two legs of the U.

12. Transport cart according to any of claims 1 to 11, **characterised by** a scoop (22) that is arranged on the support frame (1) in an axially fixed manner and can pivot about a pivot bearing (44).

13. Transport cart according to one of claims 1 to 12, **characterised by** two wheels (6) that are each attached to a wheel holder (5) in an axially fixed manner, the two wheel holders (5) being attached to the support frame (1) so as to be pivotable about a pivot axis (6) but axially fixed.

## Revendications

1. Chariot de transport, comprenant un châssis porteur (1) auquel est fixé au moins un agencement formant poignée (10) lequel est apte à pivoter autour d'un axe de pivotement (9) d'une position de rangement dans une position d'utilisation dans laquelle l'agencement formant poignée (10) est bloqué en pivotement par un dispositif de sécurité anti-rotation (18, 21, 24, 29, 32, 33), dans lequel le dispositif de sécurité anti-rotation (18, 21, 24, 29, 32, 33) est susceptible d'être amené dans une position de libération rendant possible le pivotement dans la position de rangement grâce à un déplacement d'un organe de verrouillage dans la direction axiale de l'axe de pivotement (9), dans lequel l'agencement formant poignée (10) présente un support de poignée (14) avec une cavité formant palier (16) à travers laquelle passe un tube de cadre (9) du châssis porteur et le support de poignée (14) est agencé pivotant mais non déplaçable dans la direction axiale entre un organe de guidage supérieur (39) et un organe de guidage (32) qui sont liés au tube de cadre (9) et dans lequel l'organe de verrouillage (21) qui est agencé sur l'organe de guidage inférieur (32) en étant bloqué en rotation mais déplaçable axialement, est déplaçable en direction axiale par rapport à l'agencement formant poignée (10) depuis une position de verrouillage dans une position de libération.

2. Chariot de transport selon la revendication 1, **caractérisé en ce que** l'organe de verrouillage est réalisé sous forme de manchon de verrouillage (21).

3. Chariot de transport selon la revendication 1 ou 2, **caractérisé en ce que** l'organe de verrouillage est déplaçable à l'encontre d'un ressort de rappel (43) prenant appui contre l'organe de guidage (32) qui est associé au châssis de manière fixe en rotation et en translation.

4. Chariot de transport selon l'une des revendications 1 à 3, **caractérisé en ce que** l'organe de verrouillage (21) est associé à l'organe de guidage (32) ou à l'agencement formant poignée (10) de manière fixe en rotation mais déplaçable axialement avec des moyens d'engagement à coopération de forme (29, 33), dans lequel en particulier au moins une nervure (33) engage une rainure (29).

5. Chariot de transport selon la revendication 3 ou 4, **caractérisé en ce qu'**un manchon formant palier (32) qui forme l'organe de guidage, présente des nervures (33) lesquelles forment des paliers (34) sur lesquels vient s'appuyer le ressort de rappel (43) entourant une section de guidage (35).

6. Chariot de transport selon l'une des revendications 1 à 5, **caractérisé en ce que** le support de poignée (14) et l'organe de verrouillage (21) coopèrent ensemble par des moyens d'engagement à coopération de forme (18, 24), en particulier en forme d'une denture.

7. Chariot de transport selon l'une des revendications 1 à 6, **caractérisé en ce que** l'organe de verrouillage (21) est maintenu dans la position de verrouillage par une force développée en particulier par un ressort (43).

8. Chariot de transport selon l'une des revendications 6 ou 6 et 7, **caractérisé en ce que** les moyens d'engagement à coopération de forme (18, 24) forment au moins un évidement (18) pour pénétration par une saillie (24).

9. Chariot de transport selon l'une des revendications 1 à 8, **caractérisé en ce que** l'agencement formant poignée (10) est bloqué en pivotement par l'organe de verrouillage (21) aussi bien en position de rangement qu'en position d'utilisation, dans lequel en particulier une ou plusieurs saillies (24) pénètrent dans différents évidements (18) distincts les uns des autres.

10. Chariot de transport selon l'une des revendications 1 à 9, **caractérisé en ce qu'**un bord frontal (20) du support de poignée (14) repose contre un bord frontal (36) d'un manchon inférieur formant palier (32) et un bord frontal (17') du support de poignée (14) repose contre un bord frontal d'un manchon supérieur formant palier (39), dans lequel les manchons formant palier (32, 39) sont solidarisés de manière fixe en rotation et fixe axialement à un palier de poignée (9) formé par un tube.

11. Chariot de transport selon l'une des revendications 1 à 10, **caractérisé en ce que** le châssis porteur est réalisé sous forme de tube en forme de U (9), dans lequel les deux supports de poignée (14) sont fixés aux deux branches de U.

12. Chariot de transport selon l'une des revendications 1 à 11, **caractérisé par** une pelle (22) apte à pivoter autour d'un palier de pivotement (44) et agencée au châssis porteur (1) de manière axialement fixe.

13. Chariot de transport selon l'une des revendications 1 à 12, **caractérisé par** deux roues (6) montées chacune à un support de roue (5) de manière axialement fixe, dans lequel les deux supports de roue (5) sont montés au châssis porteur (1) de manière pivotante autour d'un axe de pivotement (6) mais en étant axialement fixe (1).
